# EUROPEAN PATENT APPLICATION

(11) **EP 4 525 416 A1**
(43) Date of publication of application: **19.03.2025**
(21) Application number: 24199850.9
(22) Date of filing: 11.09.2024
(51) Int. Cl.: H04M 1/02

(54) **MOBILE DEVICE PROTECTIVE CASE SET, AND MAIN FRAME AND ASSEMBLING COMPONENT THEREOF**

(30) Priority: 12.09.2023 US 202363581986 P; 10.09.2024 US 202418830530
(71) Applicant: Evolutive Labs Co., Ltd., Taipei City 115023 (TW)
(72) Inventor: Su, Sheng-che, 408 Taichung City (TW); Hsu, Che-wei, 408 Taichung City (TW); Lin, Yu-chuan, 408 Taichung City (TW)
(74) Representative: Perani & Partners S.p.A.

(57) **Abstract**

A mobile device protective case set is suitable for cooperating with a mobile device, the mobile device protective case set includes a main frame and an assembling component, the main frame has an inner circular surface, a back flange and at least one positioning portion, the inner circular surface encloses to define a space, the space is suitable for accommodating the mobile device, the back flange protrudes from the inner circular surface towards the space, the back flange has a device abutting surface, which is suitable for a back side of the mobile device to abut, and the positioning portion is disposed at the device abutting surface; the assembling component has a base portion and at least one clamping portion, the clamping portion is disposed at a partial outer periphery of the base portion, the clamping portion is suitable for combining the positioning portion, and the device abutting surface and the clamping portion are suitable to abut against the back side of the mobile device.

Representative figure: **FIG. 1**

Reference sign list of representative figure:

1
main frame
11
inner circular surface
12
outer circular face
13
front flange
14
back flange
141
device abutting surface
15
positioning portion
2
assembling component
21
base portion
211
outer periphery
22
clamping portion
S
space

## Description

### BACKGROUND OF THE INVENTION

### 1. Field of the Invention

The present disclosure relates to a peripheral accessory of a mobile device, in particular to a mobile device protective case set and a main frame and an assembling component thereof.

### 2. Description of the Related Art

As modern people use mobile devices more frequently, in order to avoid damage or malfunction of mobile devices caused by accidental drops, the market has been flooded with protective cases for common mobile devices such as mobile phones, tablets, smart watches or wireless charging cases for earphones.

For example, a traditional protective set includes a main frame, a decorative strip and a backplate; an inner circular surface of the main frame is provided with a circular positioning portion for users to choose the circumferential edge of the decorative strip or the backplate to combine and position on the circular positioning portion according to their needs. In this way, when the mobile device is assembled into the protective set, the back side of the mobile device will be stably against the decorative strip or the backplate, and there will be no loose combination between the mobile device and the protective set.

### BRIEF SUMMARY OF THE INVENTION

However, since the back side of the mobile device abuts against the decorative strip or the backplate, the mobile device will not be able to be stably assembled in the main frame when the user does not mount the decorative strip or the backplate, and there will be a feeling of shaking and even the risk of coming out of the main frame.

In view of the above shortcoming, the inventor felt that the prior art is not perfect, so he devoted himself to careful research to overcome it, and developed a mobile device protective case set, including a main frame and an assembling component, whether the main frame is assembled with the assembling component or not, both situations can be used for a mobile device to be assembled stably without shaking.

The use of the quantifier "a" or "one" in the elements and components described in the full text of the present disclosure is only for convenience of use and to provide a common meaning of the scope of the present disclosure; in the present disclosure, it should be construed to include one or at least one, and a singular concept also includes the plural case, unless it is expressly intended to mean something else.

The similar terms such as "combine", "fit together" or "assemble" mentioned in the full text of the present disclosure mainly include the forms in which the components can be separated without destroying after being connected, or the components are inseparable after being connected, etc., which can be selected by a person having ordinary knowledge in the art according to the material or assembly requirements of the components to be connected.

To achieve the above objective and other objectives, the present disclosure provides a mobile device protective case set, suitable for cooperating with a mobile device, the mobile device protective case set includes a main frame and an assembling component, the main frame has an inner circular surface, a back flange and at least one positioning portion, the inner circular surface encloses to define a space, the space is suitable for accommodating the mobile device, the back flange protrudes from the inner circular surface towards the space, the back flange has a device abutting surface, which is suitable for a back side of the mobile device to abut, and the positioning portion is disposed at the device abutting surface; the assembling component has a base portion and at least one clamping portion, the clamping portion is disposed at a partial outer periphery of the base portion, the clamping portion is suitable for combining the positioning portion, and the device abutting surface and the clamping portion are suitable to abut against the back side of the mobile device.

In the above mobile device protective case set, a place where a display screen of the mobile device is located faces toward a forward direction, a place where the back side of the mobile device is located faces toward a backward direction, the device abutting surface is a facing forward surface of the back flange, and the device abutting surface and a facing forward surface of the clamping portion are suitable to abut against the back side of the mobile device.

In the above mobile device protective case set, the positioning portion may have a groove, a hook portion and a gap, the groove is formed by a backward recess of the device abutting surface, the hook portion is located between the groove and the space, a height of a free end of the hook portion is lower than that of the device abutting surface where the positioning portion is not provided to form the gap, the clamping portion includes a clamping hook to pass through the gap and engage in the groove.

In the above mobile device protective case set, the inner circular surface is preferably substantially smoothly connected with the facing forward surface of the clamping portion.

In the above mobile device protective case set, the outer periphery of the base portion is preferably substantially smoothly connected with the device abutting surface where the clamping portion is not provided.

In the above mobile device protective case set, the main frame has a front flange opposite to the back flange, a protruding amplitude of the back flange towards the space may be greater than a protruding amplitude of the front flange towards the space.

In the above mobile device protective case set, the number of clamping portions of the assembling component may be plural, the upper and lower edges of the base portion are respectively provided with one clamping portion, the left and right edges of the base portion are respectively provided with a plurality of clamping portions at equal intervals.

The disclosure further provides a main frame of a mobile device protective case set, suitable for assembling a mobile device, the main frame has: an inner circular surface, which encloses to define a space, the space is suitable for accommodating the mobile device; a back flange, protruding from the inner circular surface towards the space, the back flange has a device abutting surface, which is suitable for a back side of the mobile device to abut; and at least one positioning portion, disposed at the device abutting surface.

In the above main frame, the main frame is suitable for cooperating with an assembling component for assembling the mobile device, the periphery of the assembling component may have at least one clamping portion, and the positioning portion of the main frame is suitable for combining with the clamping portion of the assembling component.

In the above main frame, a place where a display screen of the mobile device is located faces toward a forward direction, a place where the back side of the mobile device is located faces toward a backward direction, the inner circular surface is preferably substantially smoothly connected with the facing forward surface of the clamping portion.

In the above main frame, a place where a display screen of the mobile device is located faces toward a forward direction, a place where the back side of the mobile device is located faces toward a backward direction, the positioning portion may have a groove, a hook portion and a gap, the groove is formed by a backward recess of the device abutting surface, the hook portion is located between the groove and the space, a height of a free end of the hook portion is lower than that of the device abutting surface where the positioning portion is not provided to form the gap, the gap is suitable for the clamping portion that forms a clamping hook to pass through the gap and engage in the groove.

In the above main frame, the main frame has a front flange opposite to the back flange, a protruding amplitude of the back flange towards the space may be greater than a protruding amplitude of the front flange towards the space.

In addition, the disclosure further provides an assembling component of a mobile device protective case set, suitable for cooperating with a main frame for assembling the mobile device, the main frame encloses to define a space suitable for accommodating the mobile device, the main frame has a back flange and at least one positioning portion, the back flange has a device abutting surface, which is suitable for a back side of the mobile device to abut, the positioning portion is disposed at the device abutting surface; the assembling component has a base portion and at least one clamping portion, the clamping portion is disposed at an outer periphery of the base portion, the clamping portion is suitable for combining the positioning portion of the main frame, and the device abutting surface and the clamping portion are suitable to abut against the back side of the mobile device.

In the above assembling component of the mobile device protective case set, a place where a display screen of the mobile device is located faces toward a forward direction, a place where the back side of the mobile device is located faces toward a backward direction, the device abutting surface is a facing forward surface of the back flange, and the device abutting surface and a facing forward surface of the clamping portion are suitable to abut against the back side of the mobile device.

In the above assembling component of the mobile device protective case set, the outer periphery of the base portion may be substantially smoothly connected with the device abutting surface of the main frame where the clamping portion is not provided.

In the above assembling component of the mobile device protective case set, the number of clamping portions may be plural, the upper and lower edges of the base portion are respectively provided with one clamping portion, the left and right edges of the base portion are respectively provided with a plurality of clamping portions at equal intervals.

Accordingly, when using the mobile device protective case set of the present disclosure, the assembling component can be assembled and combined to the main frame, so that the device abutting surface and the facing forward surface of the clamp portion jointly abut against the back side of the mobile device; alternatively, the assembling component may not be assembled, and only the device abutting surface is abutted against the back side of the mobile device. Therefore, when using the mobile device protective case set of the present disclosure, whether the main frame is assembled with the assembling component or not, the mobile device can be stably assembled, and the mobile device is not easy to shake in the main frame, so the user can choose whether to assemble the assembling component according to the demand, so as to meet different protection or modeling matching requirements.

### BRIEF DESCRIPTION OF THE DRAWINGS

FIG. 1 is a schematic perspective exploded view of a mobile device protective case set of an embodiment of the present disclosure.
FIG. 2 is a schematic top view of a mobile device protective case set of an embodiment of the present disclosure.
FIG. 3 is a sectional view along A-A line of FIG. 2.
FIG. 4 is a sectional view along B-B line of FIG. 2, wherein the drawing of an assembling component is omitted.
FIG. 5 is shown as the sectional view of FIG. 3 with a mobile device assembled.
FIG. 6 is shown as the sectional view of FIG. 4 with the assembling component drawn and the mobile device assembled.
FIG. 7 is a sectional view along C-C line of FIG. 2.
FIG. 8 is a schematic partial perspective view of the mobile device protective case set of an embodiment of the present disclosure.
FIG. 9 is a schematic partial top view of a main frame of an embodiment of the present disclosure.
FIG. 10 is a schematic partial perspective view of the main frame of an embodiment of the present disclosure.
FIG. 11 is a schematic partial sectional view of the mobile device protective case set of another embodiment of the present disclosure.

### DETAILED DESCRIPTION OF THE INVENTION

To facilitate understanding of the purpose, characteristics and effects of the present disclosure, embodiments together with the attached drawings for the detailed description of the present disclosure are provided as below.

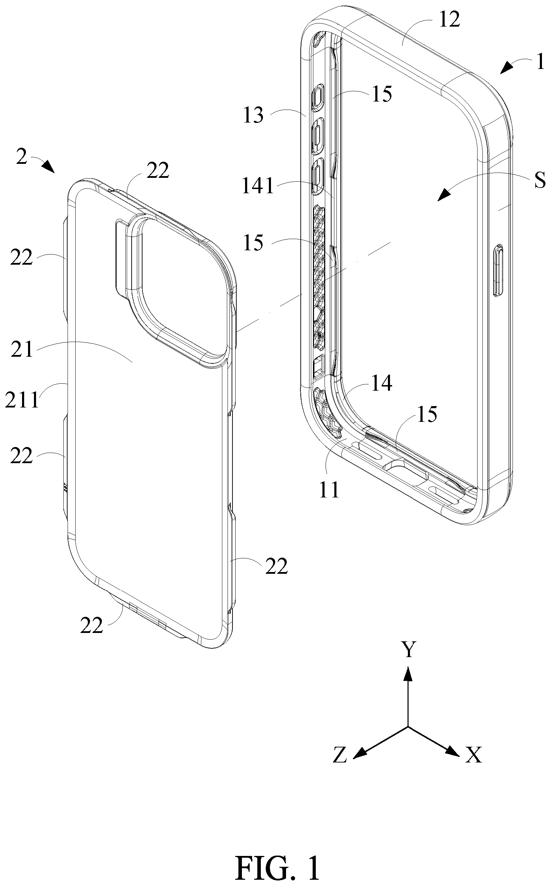

Referring to FIG. 1, it relates to a mobile device protective case set of a preferable embodiment of the present disclosure, the mobile device protective case set includes a main frame 1 and an assembling component 2 that can be assembled to each other. The mobile device protective case set may be placed on the outside of a mobile device (not shown in the figure), the mobile device may, for example, but not be limited to, a mobile phone, a tablet, a smartwatch or a wireless charging case for earbuds; although the drawings of the present embodiment are presented as an example of a mobile device protective case set for a mobile phone, the present disclosure is not limited thereto.

Among them, taking a non-folding upright mobile phone as an example, the mobile device usually has a display screen, a side edge and a back side. The display screen is opposite to the back side, and the side edge can be connected between the display screen and the back side. When the mobile device protective case set is assembled on the mobile device, the main frame 1 can surround and clad the side edge of the mobile device. The present disclosure may optionally define a direction orthogonal to a plane of the display screen as a Z direction, and a place where the display screen is located is faces toward a forward direction, and a place where the back side is located faces toward a backward direction. When the user faces the mobile device and operates the touch screen, the left and right directions are defined as a X direction and the up and down directions are defined as a Y direction according to the direction when the user operates the touch screen.

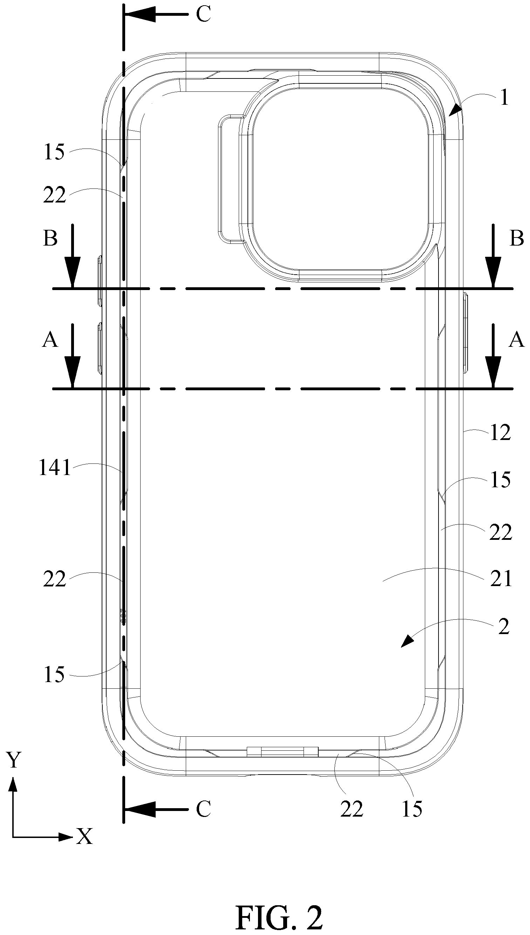

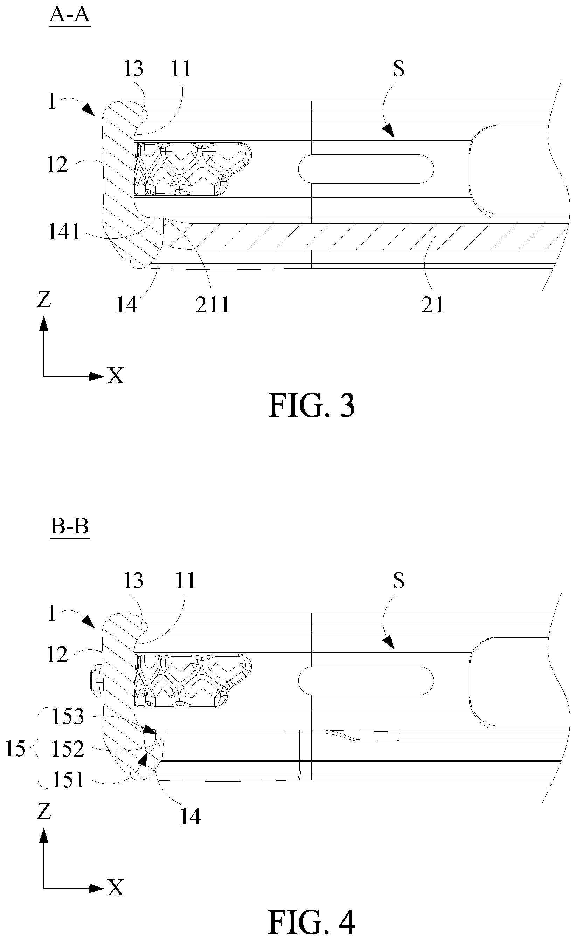

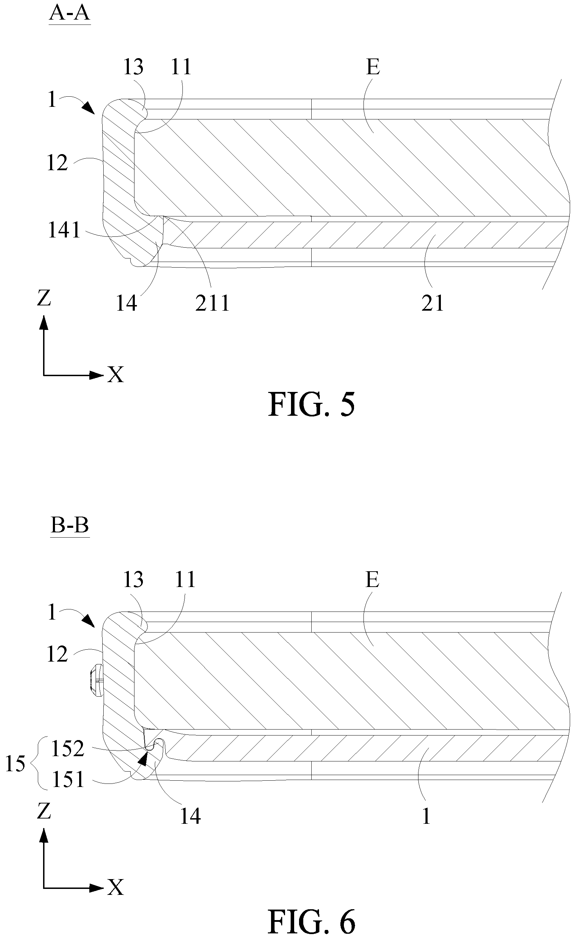

Referring to FIG. 1 to FIG. 6, the cross-section of the main frame 1 of the present embodiment on the XY plane can be generalized as a hollow rectangle, but is not limited thereto. The main frame 1 has an inner circular surface 11 and an outer circular face 12, and is enclosed by the inner circular surface 11 to define a space S suitable for accommodating a mobile device E. The main frame 1 also has a front flange 13 and a back flange 14 opposite to each other in the Z direction, and the front flange 13 and the back flange 14 respectively protrude from the inner circular surface 11 towards the space S, so that the cross-section of the main frame 1 on the XZ plane can be generalized to a C shape (as shown in FIG. 3), and thus the side edge of the mobile device E assembled into the space S can be limited between the front flange 13 and the back flange 14 (as shown in FIG. 5).

In addition, the back flange 14 has a device abutting surface 141 facing forward, which is suitable for the back side of the mobile device E to abut (as shown in FIG 5). The main frame 1 also has at least one positioning portion 15, which is located at the device abutting surface 141, the assembling component 2 has a base portion 21 and at least one clamping portion 22, the clamping portion 22 is disposed at the local outer peripheral edge of the base portion 21, and the clamping portion 22 is suitable for combining with the positioning portion 15.

In the present embodiment, when using a mobile device protective case set, the user may first assemble and combine the assembling component 2 to the main frame 1, and utilize the corresponding clamping portion 22 and the positioning portion 15 to make the assembling component 2 stably assembled in the main frame 1. The mobile device E is then assembled into the space S through the front flange 13, so that the device abutting surface 141 (as shown in FIG. 5) of the back flange 14 and a facing forward surface 221 (as shown in FIG. 6) of the clamping portion 22 can abut against the back side of the mobile device E, and thus the mobile device E will not shake in the space S.

Alternatively, the user may not assemble the assembling component 2, but directly assemble the mobile device E into the space S through the front flange 13. In this way, even if the clamping portion 22 of the assembling component 2 is missing, the back side of the mobile device E can still abut against the device abutting surface 141 of the back flange 14, and the same shaking is not generated in the space S, and can be blocked by the back flange 14, so as to ensure that the mobile device E cannot come out of the back side of the main frame 1.

Therefore, when using the mobile device protective case set in the present embodiment, whether the main frame 1 is assembled with the assembling component 2 or not, the mobile device E can be stably assembled, and the mobile device E is not easy to shake in the main frame 1, so the user can choose whether to assemble the assembling component 2 according to the demand, so as to meet different protection or modeling matching requirements. In addition, in the case of damage or loss of the assembling component 2, the user can still use the main frame 1 alone to provide protection effect for the mobile device E, without replacing the main frame 1 that is still functionally good, which can reduce unnecessary waste of resources.

It is worth noting that the present disclosure does not limit the form of the assembling component 2. For example, the assembling component 2 of the present embodiment may be a backplate, so the base portion 21 can be in the form of a plate, and after the assembling component 2 is connected to the main frame 1, the base portion 21 can shade all or part of a back opening of the main frame 1, that is, the base portion 21 can block the back side of the mobile device E and protect the back side of the mobile device E from being damaged. In other embodiments, the assembling component 2 may also be a structure similar to the traditional decorative strip, whereby, whether the main frame 1 is assembled with the assembling component 2 or not, the back side of the mobile device E can have a larger part of the exposed area, so that the assembling component 2 can be matched with the main frame 1 to produce more diverse decorative effects.

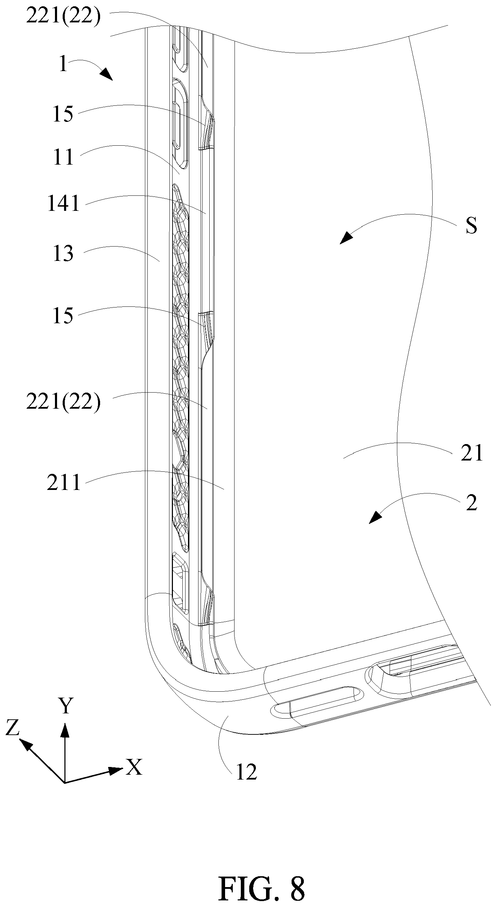

In addition, referring to FIG. 1 and FIG. 8, in one embodiment of the present disclosure, the back flange 14 can be composed of four segments. The four segments in the present embodiment may include two long segments and two short segments, a length of the long segment is greater than a length of the short segment, so as to conform to the form of most current mobile devices such as mobile phones or tablet computers; in other embodiments, the number of the long segments and/or the short segments is not limited, or each segment can also be made to be of equal length, the present disclosure does not limit thereto. In addition, the present embodiment can optionally dispose at least one positioning portion 15 on the four segments respectively, so that when the assembling component 2 is assembled on the main frame 1, the assembling component 2 can be stably combined with the main frame 1 in the X-axis direction and the Y-axis direction to prevent the assembling component 2 from loosening from the main frame 1, and the present disclosure also includes an aspect in which at least one of the four segments is provided with the positioning portion 15.

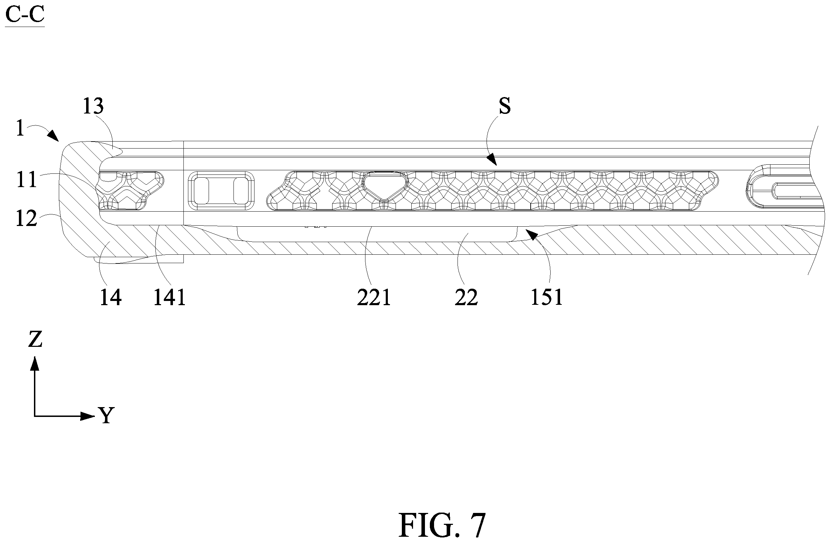

Referring to FIG. 7 and FIG. 8, in one embodiment of the present disclosure, the device abutting surface 141 of the back flange 14 can be flush with the facing forward surface 221 of the clamping portion 22; that is to say, the device abutting surface 141 and the surface 221 fail to form a segment difference in the Z direction in substance. In this way, under the condition that the back side of the mobile device is basically formed in a plane, when the main frame 1 is assembled with the assembling component 2, the mobile device protective case set of the present embodiment can make the device abutting surface 141 of the back flange 14 and the facing forward surface 221 of the clamping portion 22 can be jointly supported on different parts of the back side of the mobile device; in the present embodiment, the different parts of the back side of the mobile device refer to a continuous edge of the outer periphery the back side of the mobile device. In other embodiments, as long as the device abutting surface 141 and the surface 221 can jointly support the back side of the mobile device, the present disclosure does not limit the form of the back side of the mobile device.

Referring to FIG. 6, in addition to the above embodiments, in one embodiment of the present disclosure, the inner circular surface 11 is preferably substantially smoothly connected with the facing forward surface 221 of the clamping portion 22. In this way, when the mobile device protective case set in the present embodiment is assembled with the mobile device E, the inner circular surface 11 of the main frame 1 can surround and clad the side edge of the mobile device E, and the junction between the inner circular surface 11 and the surface 221 can also smoothly transit to the back side of the mobile device E to conform to the side edge and the back side of the mobile device E, which can enhance the cladding property and binding stability of the mobile device protective case set to the mobile device E.

Similarly, referring to FIG. 3 and FIG. 5, in one embodiment of the present disclosure, the outer periphery 211 of the base portion 21 is preferably substantially smoothly connected with the device abutting surface 141 where the clamping portion 22 is not provided; that is to say, the outer periphery 211 and the device abutting surface 141 fail to form a segment difference in the Z direction. In this way, the mobile device protective case set in the embodiment can also jointly abut against the back side of the mobile device E at the junction of the device abutting surface 141 and the outer periphery 211 of the base portion 21, so that the cladding property and binding stability of the mobile device protective case set to the mobile device E can be enhanced.

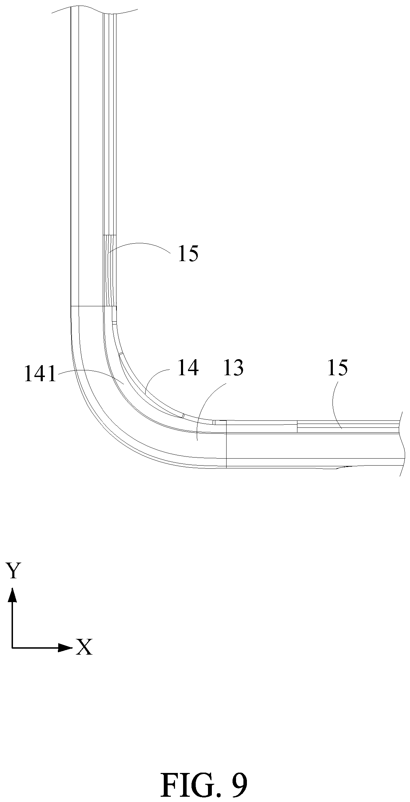

Referring to FIG. 3, in addition to the above embodiments, in one embodiment of the present disclosure, on the XY plane, a protruding amplitude of the back flange 14 towards the space S may be greater than a protruding amplitude of the front flange 13 towards the space S; that is, referring to FIG. 9 and when looking down at the main frame 1, the back flange 14 can be seen. In this way, the main frame 1 of the present embodiment can form a protective structure to prevent the mobile device from coming out of the back side by a simple structure, and the back flange 14 can also be used to set the positioning portion 15, which has the effects such as improving the manufacturing convenience of the main frame 1 and the assembly convenience of the main frame 1 and the assembling component 2.

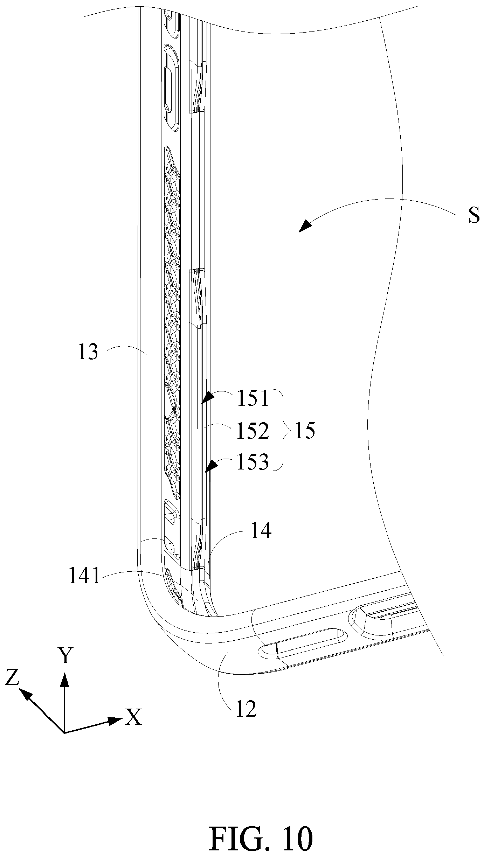

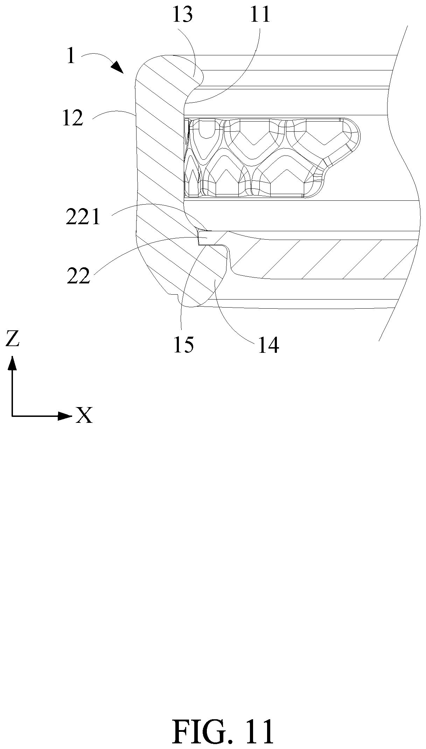

Referring to FIGS. 1, 4, 7 and 10, the shape of the positioning portion 15 can be matched with the shape of the clamping portion 22, so that the clamping portion 22 can be detachably combined with the corresponding positioning portion 15. For example, as shown in FIG. 4, in one embodiment of the present disclosure, the positioning portion 15 may have a groove 151, a hook portion 152 and a gap 153. The groove 151 is formed by the backward recess of the device abutting surface 141 towards the Z-axis, the hook portion 152 is located between the groove 151 and the space S, and the hook portion 152 can protrude forward from the bottom end of the groove 151. A height of a free end of the hook portion 152 on the Z-axis is lower than that of the device abutting surface 141 where the positioning portion 15 is not provided, and the gap 153 is formed thereby. As shown in FIG. 6, the clamping portion 22 can form a clamping hook to pass through the gap 153 and engage in the groove 151. In this way, the main frame 1 and the assembling component 2 can be combined by a structure that is easy to form and easy to disassemble, and has the effects of improving manufacturing convenience and assembly convenience and efficiency. In other embodiments, the positioning portion 15 and the clamping portion 22 can also form the corresponding structures of other different forms to position each other; for example, referring to FIG. 11, the positioning portion 15 can form a stepped shape, and the clamping portion 22 corresponds to form a flat plate shape so that it can be positioned in the positioning portion 15 by lapping, or other forms of structures, etc., and the present disclosure does not limit thereto.

Referring to FIG. 1, in addition to the above embodiments, in one embodiment of the present disclosure, the number of clamping portions 22 of the assembling component 2 may be plural, for example, the shorter upper and lower edges of the base portion 21 are respectively provided with one clamping portion 22, the longer left and right edges of the base portion 21 are respectively provided with a plurality of clamping portions 22, and the plurality of clamping portions 22 at the same left edge or right edge can be preferably disposed at equal intervals; the number and setting positions of the positioning portions 15 of the main frame 1 correspond to the clamping portions 22 of the assembling component 2. That is, the two short segments of the back flange 14 respectively correspond to the upper and lower edges of the base portion 21, so that the short segments of the back flange 14 can be optionally provided with one positioning portion 15 at the middle position; the two long segments of the back flange 14 respectively correspond to the left and right edges of the base portion 21, so that the long segments of the back flange 14 can be provided with two positioning portions 15, so as to improve the limiting effect of the main frame 1 on the assembling component 2, and avoid the assembling component 2 from loosening relative to the main frame 1. In this way, the binding stability and manufacturing convenience of the main frame 1 and the assembling component 2 can be taken into account. Among them, considering the product reliability requirements after the assembling component 2 is assembled to the main frame 1, the two positioning portions 15 disposed at the long segment of the back flange 14 are preferably disposed at intervals, which means that the two positioning portions 15 of the long segment of the back flange 14 are bridging with a device abutting surface 141.

While the present invention has been described by means of preferable embodiments, those skilled in the art should understand the above description is merely for describing the invention, and it should not be considered to limit the scope of the invention. It should be noted that all changes and substitutions which come within the meaning and range of equivalency of the embodiments are intended to be embraced in the scope of the invention. Therefore, the scope of the invention is defined by the claims, and the scope of the appended claims shall be interpreted in the broadest definition to include all such modifications, similar arrangements and processes.

### Reference sign list:

- 1: main frame
- 11: inner circular surface
- 12: outer circular face
- 13: front flange
- 14: back flange
- 141: device abutting surface
- 15: positioning portion
- 151: groove
- 152: hook portion
- 153: gap
- 2: assembling component
- 21: base portion
- 211: outer periphery
- 22: clamping portion
- 221: surface
- E: mobile device
- S: space

## Claims

1. A mobile device protective case set for a mobile device, the mobile device protective case set comprising:
a main frame, having
an inner circular surface enclosing to define a space for accommodating the mobile device,
a back flange protruding from the inner circular surface towards the space and having a device abutting surface for abutting against a back side of the mobile device, and
at least one positioning portion disposed at the device abutting surface; and
an assembling component having a base portion and at least one clamping portion, the clamping portion being disposed at a partial outer periphery of the base portion, the clamping portion being suitable for combining with the positioning portion, and the device abutting surface and the clamping portion are suitable to abut against the back side of the mobile device.

2. The mobile device protective case set according to claim 1, wherein a place where a display screen of the mobile device is located faces toward a forward direction, a place where the back side of the mobile device is located faces toward a backward direction, the device abutting surface is a facing forward surface of the back flange that faces toward the forward direction, and the device abutting surface and a surface of the clamping portion that faces toward the forward direction are suitable to abut against the back side of the mobile device.

3. The mobile device protective case set according to claim 2, wherein the positioning portion has a groove, a hook portion and a gap, the groove is formed by a backward recess of the device abutting surface, the hook portion is located between the groove and the space, a height of a free end of the hook portion is lower than that of the device abutting surface where the positioning portion is not provided to form the gap, the clamping portion includes a clamping hook to pass through the gap and engage in the groove.

4. The mobile device protective case set according to claim 2, wherein the inner circular surface is substantially smoothly connected with the facing forward surface of the clamping portion.

5. The mobile device protective case set according to claim 1, wherein the outer periphery of the base portion is substantially smoothly connected with the device abutting surface where the clamping portion is not provided.

6. The mobile device protective case set according to claim 1, wherein the main frame has a front flange opposite to the back flange, a protruding amplitude of the back flange towards the space is greater than a protruding amplitude of the front flange towards the space.

7. The mobile device protective case set according to claim 1, wherein the number of clamping portions of the assembling component is plural, the upper and lower edges of the base portion are respectively provided with one clamping portion, the left and right edges of the base portion are respectively provided with a plurality of clamping portions at equal intervals.

8. A main frame of a mobile device protective case set, suitable for assembling a mobile device; the main frame having:
an inner circular surface, enclosing to define a space, the space is suitable for accommodating the mobile device;
a back flange, protruding from the inner circular surface towards the space, the back flange has a device abutting surface, suitable for a back side of the mobile device to abut; and
at least one positioning portion, disposed at the device abutting surface.

9. The main frame of the mobile device protective case set according to claim 8, wherein the main frame is suitable for cooperating with an assembling component for assembling the mobile device, the periphery of the assembling component has at least one clamping portion, and the positioning portion of the main frame is suitable for combining with the clamping portion of the assembling component.

10. The main frame of the mobile device protective case set according to claim 9, wherein a place where a display screen of the mobile device is located faces toward a forward direction, a place where the back side of the mobile device is located faces toward a backward direction, the inner circular surface is substantially smoothly connected with the facing forward surface of the clamping portion.

11. The main frame of the mobile device protective case set according to claim 9, wherein a place where a display screen of the mobile device is located faces toward a forward direction, a place where the back side of the mobile device is located faces toward a backward direction, the positioning portion has a groove, a hook portion and a gap, the groove is formed by a backward recess of the device abutting surface, the hook portion is located between the groove and the space, a height of a free end of the hook portion is lower than that of the device abutting surface where the positioning portion is not provided to form the gap, the gap is suitable for the clamping portion that forms a clamping hook to pass through the gap and engage in the groove.

12. The main frame of the mobile device protective case set according to claim 8, wherein the main frame has a front flange opposite to the back flange, a protruding amplitude of the back flange towards the space is greater than a protruding amplitude of the front flange towards the space.

13. An assembling component of a mobile device protective case set, suitable for cooperating with a main frame for assembling a mobile device; the main frame encloses to define a space suitable for accommodating the mobile device, the main frame has a back flange and at least one positioning portion, the back flange has a device abutting surface, suitable for a back side of the mobile device to abut, the positioning portion is disposed at the device abutting surface; the assembling component having:
a base portion; and
at least one clamping portion, disposed at the outer periphery of the base portion, the clamping portion is suitable for combining the positioning portion of the main frame, and the device abutting surface and the clamping portion are suitable to abut against the back side of the mobile device.

14. The assembling component of the mobile device protective case set according to claim 13, wherein a place where a display screen of the mobile device is located faces toward a forward direction, a place where the back side of the mobile device is located faces toward a backward direction, the device abutting surface is a facing forward surface of the back flange, and the device abutting surface and a facing forward surface of the clamping portion are suitable to abut against the back side of the mobile device.

15. The assembling component of the mobile device protective case set according to claim 13, wherein the outer periphery of the base portion is substantially smoothly connected with the device abutting surface of the main frame where the clamping portion is not provided.

16. The assembling component of the mobile device protective case set according to claim 13, wherein the number of clamping portions is plural, the upper and lower edges of the base portion are respectively provided with one clamping portion, the left and right edges of the base portion are respectively provided with a plurality of clamping portions at equal intervals.
